# EUROPEAN PATENT SPECIFICATION

(11) **EP 2 867 048 B1**
(45) Date of publication and mention of the grant of the patent: **07.10.2020**
(21) Application number: 13810839.4
(22) Date of filing: 25.06.2013
(51) Int. Cl.: B60K 6/387, B60K 6/365, B60W 30/18, F16D 25/06

(54) **DRIVE ARRANGEMENT FOR A VEHICLE, VEHICLE INCLUDING SUCH A DRIVE ARRANGEMENT AND METHOD FOR CONTROLLING SUCH A DRIVE ARRANGEMENT**
ANTRIEBSANORDNUNG FÜR EIN FAHRZEUG, FAHRZEUG MIT SOLCH EINER ANTRIEBSEINRICHTUNG UND VERFAHREN ZUR STEUERUNG SOLCH EINER ANTRIEBSANORDNUNG
AGENCEMENT D'ENTRAÎNEMENT POUR UN VÉHICULE, VÉHICULE COMPRENANT UN TEL AGENCEMENT D'ENTRAÎNEMENT ET PROCÉDÉ POUR COMMANDER UN TEL AGENCEMENT D'ENTRAÎNEMENT

(30) Priority: 27.06.2012 SE 1250696
(43) Date of publication of application: 06.05.2015
(73) Proprietor: Scania CV AB, 151 87 Södertälje (SE)
(72) Inventor: BERGQUIST, Mikael, S-141 69 Huddinge (SE)
(74) Representative: Scania CV AB
(86) International application number: PCT/SE2013/050766
(87) International publication number: WO 2014/003651

(56) References cited:
- EP-A2- 1 142 741
- WO-A1-2013/002706
- WO-A1-2013/002707
- DE-A1-102008 011 080
- DE-A1-102009 046 366
- US-A1- 2003 078 127
- US-A1- 2010 173 746
- US-A1- 2012 004 797
- US-B1- 6 428 438
- US-B1- 6 805 648

## Description

### BACKGROUND OF THE INVENTION AND PRIOR ART

The present invention relates to a drive arrangement for a vehicle according to claim 1.

The invention also concerns a vehicle comprising such drive arrangement.

Hybrid vehicles can be driven by a primary motor, such as an internal combustion engine, and a secondary engine, such as an electrical machine. The electrical machine is equipped with at least one battery for storing electrical energy and control equipment for controlling the flow of electrical energy between the battery and the electrical machine. The electrical machine can thus alternately operate as a motor or a generator based on the vehicle operating condition. When the vehicle is braking, the electrical machine generates electrical energy stored in the battery. The stored electrical energy is later used for operation of the vehicle.

Utilizing a conventional clutch mechanism that decouples the transmission input shaft from the internal combustion engine during the shifting processes of the transmission involves drawbacks, such as heating of the clutch mechanism disks, resulting in increased fuel consumption and a wear of the clutch disks. A conventional clutch mechanism is also relatively heavy and expensive. It also occupies a relatively large space in the vehicle.

By connecting the output shaft of the internal combustion engine, the electrical machine rotor and the transmission input shaft with a planetary gear, the conventional clutch mechanism can be avoided. When accelerating the vehicle, an increased torque should be delivered by the internal combustion engine and the electrical machine to the transmission and on to the vehicle driving wheels. Since both the internal combustion engine and the electrical machine are connected to the planetary gear, the maximum torque delivered by the internal combustion engine and the electric motor will be limited by any of these drive units having a maximum torque lower than the maximum torque of the second drive unit. In cases where the maximum torque of the electrical machine is lower than the maximum torque of the internal combustion engine, the electrical machine will not be able to generate a sufficient reaction torque to the planetary gear, so that the internal combustion engine cannot transmit its maximum torque to the transmission and on to the vehicle driving wheels. Thus, the maximum transmitted torque to the transmission is limited by the power of the electrical machine. Especially, when a powerful acceleration of the vehicle is desired and the electrical machine is unable to generate sufficient reaction torque, heat will be generated in the electrical machine in an undesired manner.

Document US-A1- 2003/0078127 shows a drive system for a vehicle with an internal combustion engine and an electric motor, which are connected to a planetary gear. The planet wheel carrier of the planetary gear is connected to an input shaft of a transmission. The planet wheel carrier and the sun wheel of the planetary gear can be rigidly connected by a sleeve, such that the electric motor and the transmission input shaft can rotate as a rigid rotating unit. Reference is also made to documents US-A-2012/004797 and US-A-2010/173746.

In a vehicle, the available space for the drive arrangement is often limited. If the drive arrangement comprises a plurality of components such as an internal combustion engine, an electrical machine, a transmission and a planetary gear, the design must be compact. For this reason, it is desired that the electrical machine dimensions are small, which means that the electrical machine power and maximum torque generated are limited.

There are also requirements for high reliability and high dependability of the components included in the drive arrangement.

### SUMMARY OF THE INVENTION

The object of the present invention is to provide a drive arrangement for a vehicle, which drive arrangement has a compact design.

A further object of the invention is to provide a drive arrangement for a vehicle, which drive arrangement has high reliability and high dependability.

Another object of the invention is to provide a drive arrangement for a vehicle, which drive arrangement has a low weight.

Another object of the invention is to provide a drive arrangement for a vehicle, which drive arrangement has a low production cost.

These objects are achieved with the drive arrangement of the initially mentioned kind, which is characterized by the features specified in the characterizing part of claim 1.

These objects are also achieved with the vehicle, comprising such driving arrangement of the initially mentioned kind.

By rigidly connecting the engine output shaft to the transmission input shaft through the planetary gear with the use of the locking mechanism, a desired acceleration of the vehicle is obtained, while limiting the dimensions and the power of the electrical machine, which results in a compact drive arrangement with limited dimensions. Thus, the maximum torque that the electrical machine can generate may also be less than the maximum torque that the internal combustion engine can generate. With the sleeve comprising first splines, which are designed to engage with second and third splines on the first and second movable components of the planetary gear, is provided a drive arrangement according to the invention having a compact design, high reliability and high dependability and having low weight and low manufacturing cost.

According to one embodiment of the invention, the first movable component is a planet wheel carrier and the other movable component is a sun wheel. Thus, the power from the combustion engine will in the second position of the sleeve pass through the sun wheel, the sleeve, the planet wheel carrier and on to the transmission, which results in that the planet wheels are not subject to any torque. This means that the dimension of the planet wheels can be adapted only to the electrical machine torque instead of the engine torque, which in turn allows for the planet wheels to be configured with smaller dimensions. Thus is provided a drive arrangement according to the invention having a compact design, low weight and low production cost.

In line with the invention, the locking mechanism is configured as an annular sleeve, which substantially concentrically surrounds the planet wheel carrier. Thus is provided a drive arrangement according to the invention having a compact design with low weight and low manufacturing cost.

According to a further embodiment, the annular sleeve is provided with peripheral recesses, which interact with the planet wheels arranged on the planet wheel carrier.

Thus, the sleeve weight will be reduced, which reduces the manufacturing cost and the weight of the driving arrangement.

According to a further embodiment, the sleeve is moved between the first and the second position by a power element, which substantially concentrically surrounds the transmission input shaft or the engine output shaft. Thus is provided a compact design, low weight and low manufacturing cost.

According to a further embodiment, a bearing is arranged between the sleeve and the power element, which bearing allows the sleeve to rotate relative to the power element.

The power element may thus be designed such that it doesn't have to rotate, which means that the design of the power element may be simplified. The reliability and dependability of the drive arrangement can thereby be increased.

According to a further embodiment, at least one spring is arranged to move the sleeve from the first to the second position. The spring can work independent of the power element or interact with the power element for moving the sleeve. Thus, the design of the power element may be simplified and the reliability and dependability of the drive arrangement can be increased. The spring strives to bring the sleeve to the second position to allow operation of the vehicle, should the power element fail.

A planetary gear generally comprises three components which are rotably arranged relative to each other, namely a sun wheel, a planet wheel carrier and a ring gear. With knowledge of the number of teeth of the sun wheel and the ring gear, the relative speeds of the three components can be determined during operation. According to the present invention is a component of the planetary gear connected to an output shaft of the internal combustion engine. This component of the planetary gear thus rotates with a speed corresponding to the speed of the output shaft of the internal combustion engine. A second component of the planetary gear is connected to an input shaft of the transmission. This component of the planetary gear thus rotates at the same speed as the input shaft of the transmission. A third component of the planetary gear is connected to a rotor of an electrical machine. This component of the planetary gear thus rotates at the same speed as the rotor of the electrical machine if they are directly connected to each other. Alternatively, the electrical machine may be connected to the third element of the planetary gear through a transmission having a ratio. In this case, the electrical machine and the third element of the planetary gear rotate at different speeds. The speed of electrical machines is continuously adjustable. During operations when the transmission input shaft is to be given a desired speed, a control unit calculates, with knowledge of the internal combustion engine speed, the speed that the third component must be applied with in order for the transmission input shaft to obtain the desired speed. A control unit activates the electrical machine to provide the third component the calculated speed and thus the transmission input shaft the desired speed.

Further advantages with the invention appear from the following detailed description.

### BRIEF DESCRIPTION OF THE DRAWINGS

In the following, as an example, a preferred embodiment of the invention with reference to the accompanying drawings is described, in which:
- Fig. 1: shows a side view of a vehicle comprising a drive arrangement according to the present invention,
- Fig. 2: shows cross-sectional view of the drive arrangement according the present invention with a locking mechanism in a first position,
- Fig. 3: shows a cross-sectional view of the drive arrangement according to the present invention with the locking mechanism in a second position, and
- Fig. 4: shows a flow chart relating to a method for controlling the drive arrangement according to the present invention.

### DETAILED DESCRIPTION OF A PREFERRED EMBODIMENT OF THE INVENTION

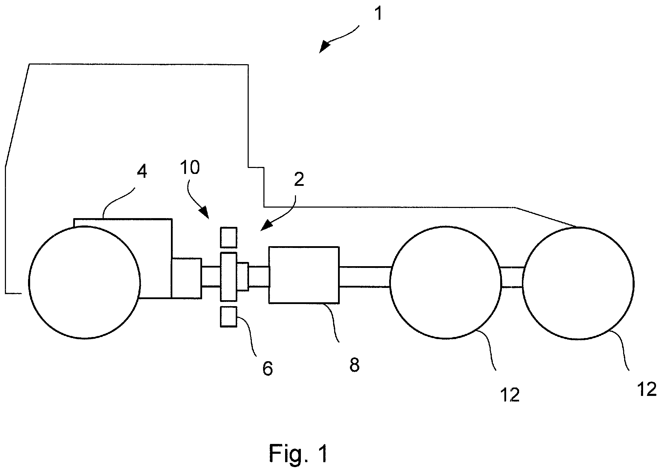

Fig. 1 shows a side view of a vehicle 1, which comprises a drive arrangement 2 according to the present invention. An internal combustion engine 4 is connected to an electrical machine 6 and a transmission 8 through a planetary gear 10. The transmission 8 is further connected to the driving wheels 12 of the vehicle 1.

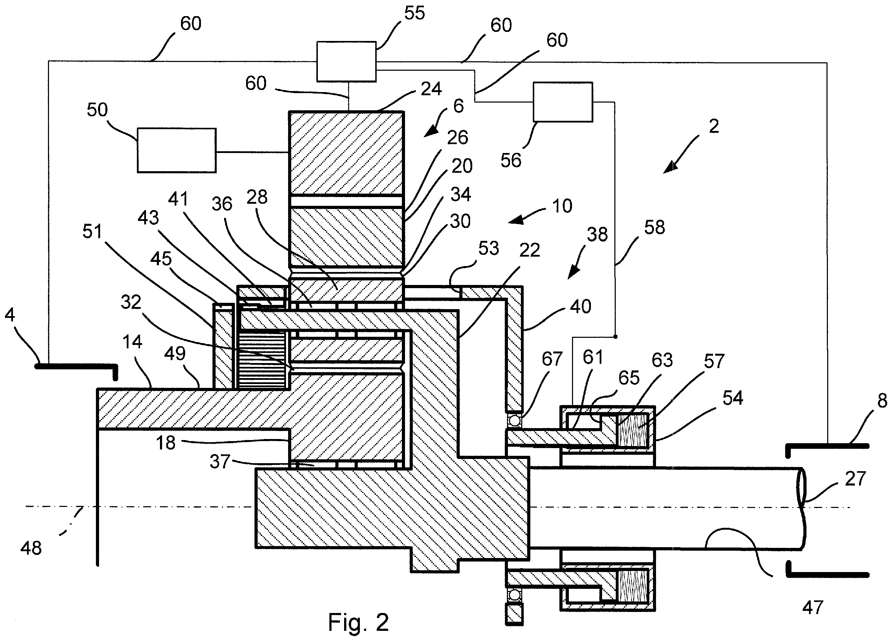

Fig. 2 shows a cross-sectional view of the drive arrangement 2 according to the present invention. The planetary gear 10 comprises movable components in the form of a sun wheel 18, a ring gear 20 and a planet wheel carrier 22. The sun wheel 18 is according to the shown embodiment connected to the output shaft 14 of the internal combustion engine 4 and forms a coherent unit. It is also possible to connect the output shaft 14 of the internal combustion engine 4 to the ring gear 20 or the planet wheel carrier 22.

The electrical machine 6 comprises a stator 24 and a rotor 26. The stator 24 is rigidly connected to the vehicle 1 and therefore does not rotate. The rotor 26 is connected to the ring gear 20 of the planetary gear 10 and can thus rotate relative to the stator 24. According to the illustrated embodiment the ring gear 20 and the rotor 26 of the electrical machine 6 constitutes an integral unit. It is also possible to construct the ring gear 20 and the rotor 26 as separate units, which are connected to each other.

An input shaft 27 of the transmission 8 is connected to the planet wheel carrier 22, which comprises a series of gear wheels referred to as planet wheels 28. These are mounted on the planet wheel carrier 22, for example by roller bearings 36. In the shown embodiment the sun wheel 18 is also mounted on the planet wheel carrier 22 by roller bearings 37. The teeth 30 of the planet wheels 28 engage teeth 32, 34, which are formed on the sun wheel 18 respectively the ring gear 20.

During engine braking, the driver releases the accelerator pedal (not shown) of the vehicle 1. The input shaft 27 of the transmission 8 thus drives the electrical machine 6 while the internal combustion engine 4 and the electrical machine 6 engine brakes. The electrical machine 6 generates electrical energy stored in a battery 50 of the vehicle. This operating condition is called regenerative braking. The electrical machine 6 thus operates as a generator. When the electrical machine 6 operates as a generator the electrical machine 6 exerts a counteracting torque on the torque from the transmission 8, resulting in that the vehicle 1 is braked, because the transmission 8 is connected to the driving wheels 12 of the vehicle 1.

When accelerating the vehicle 1 an increased torque should be delivered from the internal combustion engine 4 and the electrical machine 6 to the transmission 8 and on to the driving wheels 12 of the vehicle 1. Since both the internal combustion engine 4 and the electrical machine 6 are connected to the planetary gear 10, the maximum torque delivered by the internal combustion engine 4 and the electrical machine 6 will be limited by any of these drive units 4, 6 whose maximum torque is lower than the maximum torque of the second drive unit 4, 6. In case the maximum torque of the electrical machine 6 is lower than the maximum torque of the internal combustion engine 4, the electrical machine 6 will not be able to generate a sufficient reaction torque to the planetary gear 10, which means that the internal combustion engine 4 cannot transmit its maximum torque to the transmission 8 and on to the driving wheels 12 of the vehicle 1. Thus, the maximum torque transmitted to the transmission 8 is limited by the power of the electrical machine 6. Especially, when powerful acceleration of the vehicle 1 is desired and the electrical machine 6 cannot generate sufficient reaction torque, heat will be generated in the electrical machine 6 in an undesired manner.

By rigidly connecting the output shaft 14 of the internal combustion engine 4 to the input shaft 27 of the transmission 8, with a locking mechanism 38 through the planetary gear 10, a desired acceleration of the vehicle 1 can be obtained at the same time as the dimensions and power of the electrical machine 6 can be limited, resulting in a compact drive arrangement 2 with limited dimensions. This way, the maximum torque that the electrical machine 6 can generate may be lower than the maximum torque that the internal combustion engine 4 can generate.

The locking mechanism 38 is movable between a first and second position. In the first position the output shaft 14 of the internal combustion engine 4 and the input shaft 27 of the transmission 8 are allowed to rotate at different speeds through the planetary gear 10. In a second position the locking mechanism 38 rigidly connects the output shaft 14 of the internal combustion engine 4 to the input shaft 27 of the transmission 8 through the planetary gear 10.

The locking mechanism 38 comprises a sleeve 40 with first splines 41, which in the first position engage with second splines 43 on a first movable component, which constitutes the planet wheel carrier 22 of the planetary gear 10, and in the second position also engage with third splines 45 on a second movable component of the planetary gear 10, which constitutes the sun wheel 18. As mentioned above, the planet wheel carrier 22 is connected to the input shaft 27 of the transmission 8 and the sun wheel 18 is connected to the output shaft 14 of the internal combustion engine 4. The locking mechanism 38 is configured as an annular sleeve 40 which substantially concentrically surrounds the planet wheel carrier 22. The first splines 41 arranged on the sleeve 40 are configured around the inside of the sleeve 40 and extends in the axial longitudinal direction of the sleeve 40 corresponding to and slightly exceeding the total length of the second splines 43 that are arranged on the planet wheel carrier 22 and the third splines 45 that are arranged on the sun wheel 18. Preferably, the sun wheel 18 has a flange 51, which at its periphery is provided with the third splines 45, which engage with the sleeve 40. The second splines 43, provided on the periphery of the planet wheel carrier 22, and the third splines 45, provided on the periphery of the flange 51, are preferably configured around the entire circumference of the flange 51 and the planet wheel carrier 22. Thus is formed a spline joint when the first splines 41 on the sleeve 40 engages with the second and third splines 43, 45 on the planet wheel carrier 22 and the sun wheel 18 respectively.

The torque exerted on the sleeve 40 is reduced with increased radial extension of the flange 51 and the planet wheel carrier 22, which in turn means that the sleeve 40 dimensions can be made smaller. This allows a compact construction with low weight to be obtained. The sleeve 40 is provided with peripheral recesses 53, which are configured for preventing the sleeve 40 to conflict with the planet wheels 28 arranged on the planet wheel carrier 22. The recesses 53 have an axial extension which allows the sleeve 40 to be displaced in the axial direction without coming into contact with the planet wheels 28.

A power element 54 in the form of a pneumatic cylinder with a therein arranged axially moveable piston 61, which together substantially concentrically surrounds the input shaft 27 of the transmission 8, is arranged to move the sleeve 40 between the first and the second position. It is also possible to arrange the power element 54 such that it concentrically surrounds the output shaft 14 of the combustion engine 4. The power member 54 may also be a hydraulic cylinder or a linear motor. Preferably, a number of springs 57 are arranged to move the sleeve 40 from the first to the second position. The springs 57 may operate independently of the pneumatic cylinder 54, or interact with the cylinder 54 to move the sleeve 40. Thus, the design of the power element can be simplified and the reliability and the dependability of the driving arrangement 2 can be increased. If the power element 54 or a drive source to the power element 54, such as a compressed-air source 56, would fail, the springs 57 strive to bring the sleeve 40 to the second position, such that the sun wheel 18 and planet wheel carrier 22 are connected and a power transmission over the planetary gear 10 is possible and that the propulsion of the vehicle 1 thus is made possible. Even if the electrical machine 6 fails, the vehicle 1 will be able to be propelled when the sun wheel 18 and the planet wheel carrier 22 are connected by the sleeve 40. In the illustrated embodiment, the springs 57 are configured as helical springs, which operate with a compressing force on a first pressure surface 63 of the piston 61 in the cylinder 54. When the pneumatic pressure decreases on a second pressure surface 65 of the piston 61, the piston 61 is moved by the springs 57. When the pneumatic pressure increases on the second pressure surface 65 of the piston 61 and exceeds the compressing force of the springs 57, the piston 61 will be moved by means of the pneumatic pressure. It is thus the force from the pneumatic pressure that moves the sleeve 40 from the first to the second position and the force of the springs 57 that moves the sleeve 40 from the second to the first position. A single helical spring can be arranged in the cylinder as an alternative to multiple springs 57, which helical spring essentially concentrically surrounds the input shaft 27 of the transmission 8.

As an alternative to the cylinder 54 concentrically arranged with the input shaft 27 of the transmission 8, the power element 54 can be a control fork (not shown) which is adapted to move the sleeve 40 between the first and the second position.

A bearing 67 is arranged between the sleeve 40 and the pneumatic cylinder 54, which bearing allows the sleeve 40 to rotate relative to the cylinder 54. The bearing 67 allows the sleeve 40 to rotate relative to the cylinder 54, such that the cylinder 54 can be configured not to rotate. Thus, the piston 61 in the cylinder will not rotate relative to the cylinder 54, which means that the seals between the cylinder 54 and piston 61 can be simplified, which means that the design of the cylinder 54 can be simplified. The bearing 67 according to the shown embodiment in Figure 2 is a radial groove ball bearing, which can also carry axial forces, such that the piston 61 in the cylinder 54 can move the sleeve 40 axially. Another type of bearing is also possible, such as a thrust bearing or an angular contact bearing.

The output shaft 14 of the combustion engine 4, the rotor 26 of the electrical machine 6, the input shaft 27 of the transmission 8 and the sleeve 40 are rotably arranged about a common rotation axis 48.

The sleeve 40 is axially displaceable along the input shaft 27 of the transmission 8 during the movement between the first and the second position. In the event that the output shaft 14 of the internal combustion engine 4 instead is connected to the planet wheel carrier 22, the sleeve 40 is axially displaceable along the output shaft 14 of the internal combustion engine 4 during the movement between the first and the second position.

To displace and move the sleeve 40 from the first to the second position, the internal combustion engine 4 and the electrical machine 6 are controlled such that a torque-free state is provided between the output shaft 14 of the internal combustion engine 4 and the planetary gear 10. For this is a controller 55 used, which also is adapted to control the electrical machine 6 to utilize stored electrical energy under certain applicable operational occasions for supplying motive power to the input shaft 27 of the transmission 8 and to utilize the kinetic energy of the input shaft 27 of the transmission 8 under different operational occasions for extracting and storing electrical energy. The controller 55 thus detects the speed and/or torque of the output shaft 14 of the internal combustion engine 4, the input shaft 27 of the transmission 8 and the rotor 26 of the electrical machine 6, thereby controlling the internal combustion engine 4 and the electrical machine 6 such that a torque-free state is provided between the output shaft 14 of the internal combustion engine 4 and the input shaft 27 of the transmission. When the torque-free state is achieved the sleeve 40 is displaced and moved to the second position by the control unit activating the compressed-air source 56, which through line 58 supplies the compressed air to the pneumatic cylinder 54, such that the cylinder 54 moves the sleeve 40. The controller 55 is connected to the internal combustion engine 4, the transmission 8, the electrical machine 6 and the compressed-air source 56 through electrical conductors 60. The controller 55 thereby controls the movement of the sleeve 40. It is also possible to arrange a separate controller for the compressed-air source 56.

The controller 55 is thus adapted to control the sleeve 40 and also adapted to determine on what occasions the electrical machine 6 will operate as an engine and on what occasions it will operate as a generator. To determine this, the controller 55 can receive current information from the appropriate operating parameters mentioned above. The controller 55 may be a computer with appropriate software for this purpose. The controller 55 also controls the flow of electrical energy between a battery 50 and the stator 24 of the electrical machine 6. When the electrical machine 6 operates as an engine stored electrical energy is supplied from the battery 50 to the stator 24. When the electrical machine 6 operates as a generator electrical energy is supplied from the stator 24 to the battery 50.

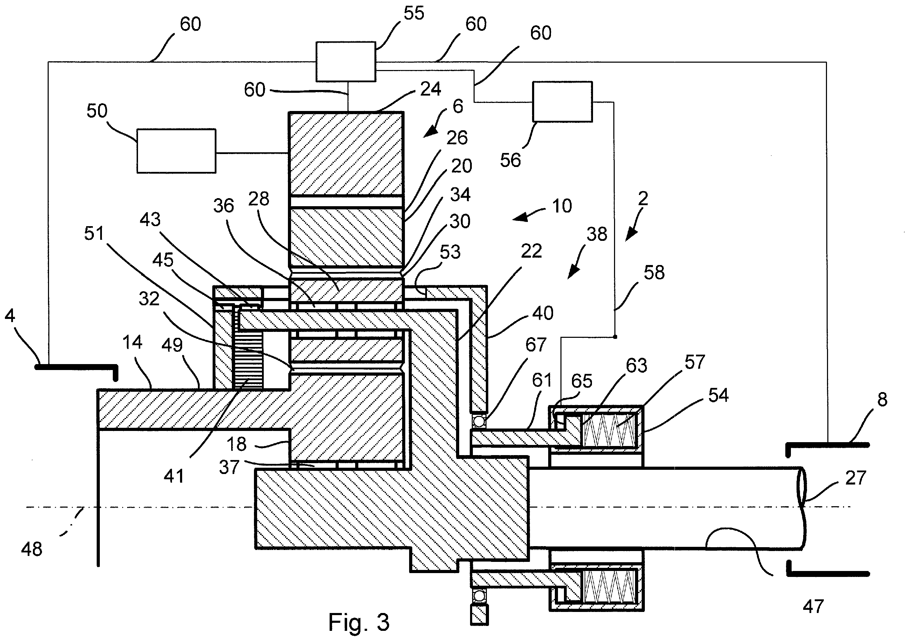

Fig. 3 shows a cross-sectional view of the drive arrangement 2 according to the present invention with the locking mechanism 38 in the second position. In the second position, the output shaft 14 of the internal combustion engine 4 and input shaft 27 of the transmission 8 are rigidly connected by the sleeve 40 through the planetary gear 10. To allow this movement of the sleeve 40, the controller 55 has first controlled the internal combustion engine 4 and the electrical machine 6 such that a torque-free state has been provided between the output shaft 14 of the internal combustion engine 4 and the input shaft of the transmission, as explained above in association with Figure 2.

In the second position of the sleeve 40, the power from the internal combustion engine 4 will pass through the sun wheel 18, the sleeve 40, and the planet wheel carrier 22 and on to the transmission 8, which results in that the planet wheels 28 are not subject to any torque. This means that the dimension of the planet wheels 28 may be adapted only to the torque of the electrical machine 6 instead of the torque of the internal combustion engine 4, which in turn means that the planet wheels 28 may be configured with smaller dimensions. Thus is obtained a driving arrangement 2 according to the invention with a compact design, low weight and low manufacturing cost.

When the vehicle 1 is accelerated to a desired speed the cylinder 54 is controlled, such that the sleeve 40 is returned to the first position. The internal combustion engine 4 and the electrical machine 6 are at the same time controlled by the controller 55, such that a torque-free state is provided between the output shaft 14 of the internal combustion engine 4 and the input shaft 27 of the transmission 8. When the torque-free state is achieved the sleeve 40 is displaced and moved to the first position. When the sleeve 40 is returned to the first position, the vehicle 1 can be driven by both the internal combustion engine 4 and the electrical machine 6.

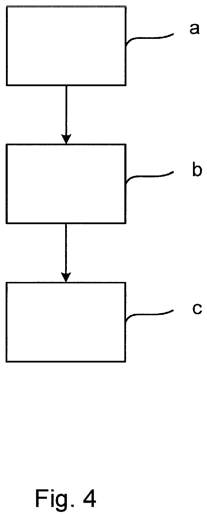

Fig. 4 shows a flow chart relating to a method for controlling a drive arrangement 2 The method of the invention comprises a first step a) wherein the internal combustion engine 4 and the electrical machine 6 are controlled such that a substantially torque-free state is provided between the output shaft 14 of the internal combustion engine 4 and the input shaft 27 of the transmission 8.

In a subsequent step b) the output shaft of the internal combustion engine 4 and the planetary gear 10 are rigidly connected to each other by the movement of a locking mechanism 38, comprising a sleeve 40 provided with first splines 41, from a first position, in which the output shaft 14 of the combustion engine 4 and input shaft 27 of the transmission 8 are allowed to rotate at different speeds through the planetary gear 10, to a second position, in which the sleeve 40 rigidly connects the output shaft 14 of the internal combustion engine 4 and the input shaft 27 of the transmission 8 through the planetary gear 10.

According to a further step or an alternative step c) the sleeve 40 is moved by spring force from the first to the second position.

The above mentioned components and features may within the invention be combined between different specific embodiments. The scope of protection is defined by the claims.

## Claims

1. A drive arrangement for a vehicle, wherein the arrangement (2) comprises an output shaft (14) of an internal combustion engine (4), an input shaft (27) of a transmission (8), an electrical machine (6) comprising a stator (24) and a rotor (26), a planetary gear (10) comprising movable elements (18, 20, 22), and a locking mechanism (38) which is movable between a first and second position, in which first position the output shaft (14) of the internal combustion engine (4) and the input shaft (27) of the transmission (8) are allowed to rotate at different speeds through the planetary gear (10), and in which second position the locking mechanism (38) rigidly connects the output shaft (14) of the internal combustion engine (4) to the input shaft (27) of the transmission (8) through the planetary gear (10), **characterized in that** the locking mechanism (38) comprises a sleeve (40) provided with first splines (41), which in the first position engage with second splines (43) on a first moving component (18, 20, 22) of the planetary gear (10) and in the second position further engage with third splines (45) on a second movable component (18, 20, 22) of the planetary gear (10), wherein the first movable component (18 , 20, 22) is connected to the input shaft (27) of the transmission (8) and the second movable component (18, 20, 22) is connected to the output shaft (14) of the combustion engine (4); **in that** the first movable component is a planet carrier (22) and the second movable component is a sun wheel (18); and **in that** the locking mechanism (38) is configured as an annular sleeve (40) substantially concentrically surrounding the planet wheel carrier (22).

2. The drive arrangement according to claim 1, **characterized in that** the annular sleeve (40) is provided with peripheral recesses (53) interacting with planet wheels (28) arranged on the planet wheel carrier (22).

3. The drive arrangement according to any preceding claim, **characterized in that** the locking mechanism (38) is axially displaceable along the input shaft (27) of the transmission (8) or the output shaft (14) of the internal combustion engine (4) during the movement between the first and second position.

4. The drive arrangement according to any preceding claim, **characterized in that** a power element (54) is arranged to move the sleeve (40) between the first and second position.

5. The drive arrangement according to claim 4, **characterized in that** the power element (54) substantially concentrically surrounds the input shaft (27) of the transmission (8) or the output shaft (14) of the internal combustion engine (4).

6. The drive arrangement according to any of claims 4 or 5, **characterized in that** a bearing (67) is arranged between the sleeve (40) and the power element (54), which bearing allows the sleeve (40) to rotate relative to the power element (54).

7. The drive arrangement according to claim 4-6, **characterized in that** the power element (54) is a pneumatic cylinder.

8. The drive arrangement according to any preceding claim, **characterized in that** at least one spring (57) is arranged to move the sleeve (40) from the first to the second position.

9. The drive arrangement according to any preceding claim, **characterized in that** the output shaft (14) of the internal combustion engine (4), the rotor (26) of the electrical machine (6), the input shaft (27) of the transmission (8) and the sleeve (40) are rotably arranged about a common rotation axis (48).

10. The drive arrangement according to any preceding claim, **characterized in that** a controller (55) is adapted to control the electrical machine (6) such that it during certain applicable operational occasions utilizes stored electrical energy for supplying motive force to the input shaft (27) of the transmission (8) and during different operational occasions utilizes the kinetic energy of the input shaft (27) of the transmission (8) to extract and store electrical energy.

11. A vehicle (1) **characterized in that** it comprises a drive arrangement (2) according to any of the claims 1-10.

## Patentansprüche

1. Antriebsanordnung für ein Fahrzeug, wobei die Anordnung (2) eine Ausgangswelle (14) eines Verbrennungsmotors (4), eine Eingangswelle (27) eines Getriebes (8), eine elektrische Maschine (6) mit einem Stator (24) und einem Rotor (26), ein Planetengetriebe (10) mit beweglichen Elementen (18, 20, 22), und eine Arretiereinrichtung (38) umfasst, die zwischen einer ersten und zweiten Stellung bewegbar ist, wobei in der ersten Stellung die Ausgangswelle (14) des Verbrennungsmotors (4) und die Eingangswelle (27) des Getriebes (8) durch das Planetengetriebe (10) mit unterschiedlichen Drehzahlen rotieren können, und wobei in der zweiten Stellung die Arretiereinrichtung (38) die Ausgangswelle (14) des Verbrennungsmotors (4) durch das Planetengetriebe (10) starr mit der Eingangswelle (27) des Getriebes (8) verbindet, **dadurch gekennzeichnet, dass** die Arretiereinrichtung (38) eine Hülse (40) aufweist, die mit ersten Schiebekeilen (41) versehen ist, die in der ersten Stellung in Eingriff sind mit zweiten Schiebekeilen (43) auf einer ersten beweglichen Komponente (18, 20, 22) des Planetengetriebes (10) und in der zweiten Stellung ferner in Eingriff sind mit dritten Schiebekeilen (45) auf einer zweiten beweglichen Komponente (18, 20, 22) des Planetengetriebes (10), wobei die erste bewegliche Komponente (18, 20, 22) mit der Eingangswelle (27) des Getriebes (8) verbunden ist und die zweite bewegliche Komponente (18, 20, 22) mit der Ausgangswelle (14) des Verbrennungsmotors (4) verbunden ist, dass die erste bewegliche Komponente ein Planetenträger (22) ist und die zweite bewegliche Komponente ein Sonnenrad (18) ist, und dass die Arretiereinrichtung (38) als eine ringförmige Hülse (40) ausgeführt ist, die den Planetenradträger (22) im Wesentlichen konzentrisch umgibt.

2. Antriebsanordnung nach Anspruch 1, **dadurch gekennzeichnet, dass** die ringförmige Hülse (40) mit Umfangsausnehmungen (53) versehen ist, die mit Planetenrädern (28) zusammenwirken, welche auf dem Planetenradträger (22) angeordnet sind.

3. Antriebsanordnung nach einem der vorhergehenden Ansprüche, **dadurch gekennzeichnet, dass** die Arretiereinrichtung (38) während der Bewegung zwischen der ersten und zweiten Stellung axial entlang der Eingangswelle (27) des Getriebes (8) oder der Ausgangswelle (14) des Verbrennungsmotors (4) verlagerbar ist.

4. Antriebsanordnung nach einem der vorhergehenden Ansprüche, **dadurch gekennzeichnet, dass** ein Servoelement (54) dazu angeordnet ist, die Hülse (4) zwischen der ersten und zweiten Stellung zu bewegen.

5. Antriebsanordnung nach Anspruch 4, **dadurch gekennzeichnet, dass** das Servoelement (54) die Eingangswelle (27) des Getriebes (8) oder die Ausganswelle (14) des Verbrennungsmotors (4) im Wesentlichen konzentrisch umgibt.

6. Antriebsanordnung nach einem der Ansprüche 4 oder 5, **dadurch gekennzeichnet, dass** ein Lager (67) zwischen der Hülse (40) und dem Servoelement (54) angeordnet ist, wobei das Lager der Hülse (40) gestattet, sich relativ zu dem Servoelement (54) zu drehen.

7. Antriebsanordnung nach den Ansprüchen 4 bis 6, **dadurch gekennzeichnet, dass** das Servoelement (54) ein Pneumatikzylinder ist.

8. Antriebsanordnung nach einem der vorhergehenden Ansprüche, **dadurch gekennzeichnet, dass** wenigstens eine Feder (57) dazu angeordnet ist, die Hülse (40) aus der ersten in die zweite Stellung zu bewegen.

9. Antriebsanordnung nach einem der vorhergehenden Ansprüche, **dadurch gekennzeichnet, dass** die Ausgangswelle (14) des Verbrennungsmotors (4), der Rotor (26) der elektrischen Maschine (6), die Eingangswelle (27) des Getriebes (8) und die Hülse (40) um eine gemeinsame Drehachse (48) drehbar angeordnet sind.

10. Antriebsanordnung nach einem der vorhergehenden Ansprüche, **dadurch gekennzeichnet, dass** ein Steuergerät (55) die elektrische Maschine (6) solcherma-ßen zu steuern vermag, dass sie während gewisser geeigneter betrieblicher Ereignisse gespeicherte elektrische Energie dazu verwendet, der Eingangswelle (27) des Getriebes (8) Antriebskraft zuzuführen, und während anderer betrieblicher Ereignisse die kinetische Energie der Eingangswelle (27) des Getriebes (8) dazu verwendet, elektrische Energie zu extrahieren und zu speichern.

11. Fahrzeug (1), **dadurch gekennzeichnet, dass** es eine Antriebsanordnung (2) nach einem der Ansprüche 1 bis 10 aufweist.

## Revendications

1. Agencement d'entraînement pour un véhicule, dans lequel l'agencement (2) comprend un arbre de sortie (14) d'un moteur à combustion interne (4), un arbre d'entrée (27) d'une transmission (8), une machine électrique (6) comprenant un stator (24) et un rotor (26), un engrenage planétaire (10) comprenant des éléments mobiles (18, 20, 22), et un mécanisme de verrouillage (38) qui est mobile entre une première et une deuxième position, dans laquelle première position l'arbre de sortie (14) du moteur à combustion interne (4) et l'arbre d'entrée (27) de la transmission (8) peuvent tourner à des vitesses différentes à travers l'engrenage planétaire (10), et dans laquelle deuxième position le mécanisme de verrouillage (38) relie rigidement l'arbre de sortie (14) du moteur à combustion interne (4) à l'arbre d'entrée (27) de la transmission (8) à travers l'engrenage planétaire (10), **caractérisé en ce que** le mécanisme de verrouillage (38) comprend un manchon (40) pourvu de premières cannelures (41), qui dans la première position s'engagent avec des deuxièmes cannelures (43) sur un premier élément de mouvement (18, 20, 22) de l'engrenage planétaire (10) et dans la deuxième position s'engage en outre avec des troisièmes cannelures (45) sur un deuxième élément mobile (18, 20, 22) de l'engrenage planétaire (10), dans lequel le premier élément mobile (18, 20, 22) est relié à l'arbre d'entrée (27) de la transmission (8) et le deuxième élément mobile (18, 20, 22) est relié à l'arbre de sortie (14) du moteur à combustion (4) ; **en ce que** le premier composant mobile est un porte-satellites (22) et le deuxième élément mobile est une roue solaire (18) ; et **en ce que** le mécanisme de verrouillage (38) est configuré comme un manchon annulaire (40) entourant sensiblement concentriquement le porte-satellites (22).

2. Agencement d'entraînement selon la revendication 1, **caractérisé en ce que** le manchon annulaire (40) est fourni avec des évidements périphériques (53) coopérant avec des roues planétaires (28) agencées sur le porte-satellites (22).

3. Agencement d'entraînement selon l'une quelconque des revendications précédentes, **caractérisé en ce que** le mécanisme de verrouillage (38) est déplaçable axialement le long de l'arbre d'entrée (27) de la transmission (8) ou de l'arbre de sortie (14) du moteur à combustion interne (4) durant le mouvement entre la première et la deuxième position.

4. L'agencement d'entraînement selon l'une quelconque des revendications précédentes, **caractérisé en ce qu'**un élément de puissance (54) est agencé pour déplacer le manchon (40) entre la première et la deuxième position.

5. L'agencement d'entraînement selon la revendication 4, **caractérisé en ce que** l'élément de puissance (54) entoure sensiblement concentriquement l'arbre d'entrée (27) de la transmission (8) ou l'arbre de sortie (14) du moteur à combustion interne (4).

6. L'agencement d'entraînement selon l'une quelconque des revendications 4 ou 5, **caractérisé en ce qu'**un roulement (67) est disposé entre le manchon (40) et l'élément de puissance (54), lequel roulement permet au manchon (40) de tourner par rapport à l'élément de puissance (54).

7. L'agencement d'entraînement selon la revendication 4-6, **caractérisé en ce que** l'élément de puissance (54) est un cylindre pneumatique.

8. L'agencement d'entraînement selon l'une quelconque des revendications précédentes, **caractérisé en ce qu'**au moins un ressort (57) est agencé pour déplacer le manchon (40) de la première à la deuxième position.

9. L'agencement d'entraînement selon l'une quelconque des revendications précédentes, **caractérisé en ce que** l'arbre de sortie (14) du moteur à combustion interne (4), le rotor (26) de la machine électrique (6), l'arbre d'entrée (27) de la transmission (8) et le manchon (40) sont agencés de manière rotative autour d'un axe de rotation commun (48).

10. L'agencement d'entraînement selon l'une quelconque des revendications précédentes, **caractérisé en ce qu'**un contrôleur (55) est adapté pour commander la machine électrique (6) de sorte que, durant certaines occasions opérationnelles applicables elle utilise l'énergie électrique stockée pour l'alimentation de la force motrice à l'arbre d'entrée (27) de la transmission (8) et que, durant des occasions opérationnelles différentes, elle utilise l'énergie cinétique de l'arbre d'entrée (27) de la transmission (8) pour extraire et stocker de l'énergie électrique.

11. Véhicule (1), **caractérisé en ce qu'**il comprend un agencement d'entraînement (2) selon l'une quelconque des revendications 1-10.
